**Europäisches Patentamt**

**European Patent Office**

**Office européen des brevets**

(19)

(11) Veröffentlichungsnummer: **0 092 131**
**B1**

(12) **EUROPÄISCHE PATENTSCHRIFT**

(45) Veröffentlichungstag der Patentschrift:
**11.05.88**

(51) Int. Cl.⁴: **A 22 C 11/02**

(21) Anmeldenummer: **83103483.0**

(22) Anmeldetag: **11.04.83**

(54) **Vorrichtung zur Herstellung von gefüllten Schlauchhüllen.**

(30) Priorität: **21.04.82 DE 3214673**

(43) Veröffentlichungstag der Anmeldung:
**26.10.83 Patentblatt 83/43**

(45) Bekanntmachung des Hinweises auf die Patenterteilung:
**11.05.88 Patentblatt 88/19**

(84) Benannte Vertragsstaaten:
**AT BE CH DE FR GB IT LI LU NL SE**

(56) Entgegenhaltungen:
**EP - A - 0 064 266**
**EP - A - 0 068 190**
**DE - A - 3 120 205**
**FR - A - 1 546 258**
**US - A - 4 202 075**
**US - A - 4 321 728**

(73) Patentinhaber: **HOECHST AKTIENGESELLSCHAFT,
Postfach 80 03 20, D-6230 Frankfurt am Main 80 (DE)**

(72) Erfinder: **Becker, Reinhold, Dr., Am Hohen Stein 18,
D-6200 Wiesbaden (DE)**
Erfinder: **Michel, Wolfgang, Am Hohen Stein 24,
D-6200 Wiesbaden (DE)**

## Beschreibung

Die Erfindung bezieht sich auf eine Vorrichtung von der im Oberbegriff des Anspruchs 1 genannten Art.

Zur Verpackung von Nahrungsmitteln, z.B. Fleischwaren in Form von Wurstmasse oder Schinkenstücken, werden bekanntlich geraffte, schlauchförmige Hüllen aus synthetischem, halbsynthetischem oder natürlichem Material verwendet. Diese Hüllen, in der Fachsprache auch als «Raupen» oder «Hohlstäbe» bezeichnet, werden aus langen Hüllen durch Raffen und längsaxiales Stauchen hergestellt, wobei die Länge der gerafften Hülle gewöhnlich nur noch 1 bis 3% der Ursprungslänge beträgt. Im allgemeinen wird zum Abfüllen der Wurstmasse zunächst eine einseitig verschlossene, geraffte schlauchförmige Hülle über das Füllrohr einer Wurstabfüllmaschine geschoben. Die Wurstmasse wird dann unter Druck durch das Füllrohr in die Hülle gepresst, welche dadurch fortlaufend entrafft wird. Nach Erreichen einer bestimmten Länge werden zylinderförmige Würste abgebunden und verschlossen.

Der Durchmesser der erhaltenen Würste sollte aus verschiedenen Gründen über die gesamte Länge konstant bleiben. Nur ein gleichmässiger Durchmesser, dessen Grösse z.B. vom Hüllenmaterial abhängig ist, gewährleistet einen optimalen Abfüllvorgang. Auch besteht bei Überfüllung die Gefahr des Aufplatzens der Wursthülle, während die Wursthülle bei zu geringer Füllung eine faltige Oberfläche zeigt.

Es wurden bereits verschiedene Vorrichtungen zum Abfüllen von Wurstmasse in geraffte, schlauchförmige Hüllen vorgeschlagen, bei denen spezielle Einrichtungen zum Entraffen, Glätten und Bremsen einen möglichst gleichmässigen Durchmesser der gefüllten Packung erzielen sollen.

So ist es üblich, in der Nähe der Öffnung des Füllrohres der Abfüllmaschine ein Kalibrierteil anzubringen, welches mit seiner Oberfläche auf die Innenwand der zu füllenden Hülle angepresst wird und diese aufweitet. Durch diesen Anpressdruck treten zwischen dem Kalibrierteil und der Innenwand der Hülle Reibungskräfte auf, welche den Abzug der Hülle bremsen (US-A-2 871 508).

Es ist auch bekannt, die geraffte, schlauchförmige Hülle zusammen mit einer Kalibrierscheibe zu verpacken und diese Anordnung vor dem Füllvorgang mit dem Füllrohr zu verbinden (US-A-4 007 761). Die Kalibrierscheibe wird von einem ungerafften Teil eingeschlossen, wobei allerdings der Aussenumfang der Kalibrierscheibe grösser sein soll als der Innenumfang der ungerafften Hülle. Beim Füllvorgang (US-A-4 077 090) wird die Hülle über die Kalibrierscheibe gezogen und somit gedehnt und aufgeweitet. Die Kalibrierscheibe muss aus starrem unelastischem Material bestehen, so dass ihr Durchmesser durch die Andruckkraft der Hülle gegen den Umfang der Kalibrierscheibe nicht verändert werden kann. Das Bremsen der Hülle beim Abziehen vom gerafften Hüllenteil während des Füllvorgangs erfolgt durch eine zusätzliche nach der Kalibrierscheibe angeordnete Einrichtung in Form eines Rings mit einem ringförmigen Ansatz, wobei die Bremswirkung durch die Reibkraft zwischen Schlauchhülle und dem Ansatz bestimmt wird.

Diese unelastische Kalibrierscheibe zeigt den Nachteil, dass bei fertigungstechnisch nicht zu vermeidenden Schwankungen des Hüllenumfangs keine optimale Füllung der Hülle erreicht wird. Bei zu kleinem Kaliber der Hülle besteht ausserdem die Gefahr, dass sie durch die Kalibrierscheibe beschädigt wird oder abreisst; zumindest tritt eine besonders starke Reibung zwischen Hülle und Kalibrierscheibe auf, so dass die Hülle mit Wurstmasse überfüllt werden kann und beim Brühen dazu neigt, dem auftretenden hohen Druck nicht standzuhalten und zu platzen. Ausserdem lässt sich die Aufweitung der Hülle während des Füllvorgangs nicht verändern; sie ist durch die eingelegte Kalibrierscheibe festgelegt.

Ferner ist eine Kalibriervorrichtung bekannt (US-A-4 202 075), die aus einem flexiblen Material besteht und deren Durchmesser variierbar ist. Auch mit dieser Vorrichtung soll die Schlauchhülle vor dem Befüllen mit Wurstmasse gedehnt und aufgeweitet werden, wobei diese Vorrichtung eine steuerbare Aufweitung gestattet, die allerdings durch die Dehnbarkeit des Materials stark eingeengt ist. Ferner können auch in diesem Fall starke Reibungskräfte zwischen der Schlauchhülle und dem Kalibrierteil auftreten. Das Abbremsen der Schlauchhülle erfolgt auch in diesem Fall mit einem nach der Kalibriervorrichtung angeordneten Bremselement, welches die Schlauchhülle gegen das Füllrohr anpresst.

Ausgehend von diesem Stand der Technik besteht die Aufgabe der vorliegenden Erfindung darin, eine Vorrichtung zu schaffen, die zum gleichzeitigen Entfälteln, Glätten, Spreizen und gegebenenfalls Abbremsen einer gerafften Schlauchhülle vor dem Befüllen mit einer Stopfvorrichtung geeignet ist, wobei die Schlauchhülle problemlos unter gleichzeitigem Abbremsen vom gerafften in einen einwandfreien faltenfreien Zustand übergeführt werden kann, ohne dass Gefahr besteht, dass die Schlauchhülle bei diesem Vorgang vom Bremsteil oder vom Kalibrierteil beschädigt wird. Ferner soll die Vorrichtung einen ruckfreien Abzug ermöglichen, wobei die Gefahr von Abrissen der Schlauchhülle verringert ist. Die Vorrichtung soll ausserdem die Möglichkeit bieten, das Ausmass der Spreizung der Hülle stark variieren zu können.

Diese Aufgabe wird gelöst durch die Vorrichtung mit den in Anspruch 1 aufgezeigten Merkmalen. Die Unteransprüche betreffen Weiterbildungen der Erfindung.

Der Einfachheit halber wird anstelle von «Einrichtung zum Entraffen, Glätten, Spreizen sowie gegebenenfalls Bremsen» im folgenden von «glättender Einrichtung» gesprochen, wobei ferner zu berücksichtigen ist, dass sie gegebenenfalls auch bremsende Funktion ausübt, wenn die Schlauchhülle am Aussenumfang der scheibenförmigen Körper eng anliegt.

Der Innenumfang der entrafften Schlauchhülle wird beim Gleiten über die ihn glättende Einrichtung gespreizt, wobei je nach Lage der gegeneinander verdrehbaren und/oder in Richtung der Füllrohrlängsachse verschiebbaren, scheibenförmigen Körper die Spreizwirkung verschieden stark ausgeprägt ist. Sie wird verstärkt, wenn zwei benachbarte Körper in entgegengesetzten Richtungen in einer Ebene senkrecht zur Füllrohrlängsachse voneinander wegbewegt werden. Dies geschieht beispielsweise in der Weise, dass man die Bohrung der Körper als Langloch ausbildet, welches in seiner Breite etwa dem Füllrohrdurchmesser entspricht und dessen Länge grösser ist als der Füllrohrdurchmesser. Es ist auch möglich im Querschnitt ellipsenförmige Körper mit vorzugsweise zentraler Bohrung zu verwenden, wobei eine maximale Spreizung der Schlauchhülle dann erreicht wird, wenn zwei benachbarte Körper um 90° gegeneinander verdreht sind. Sind die Körper im Querschnitt kreisförmig ausgebildet, so muss die Bohrung exzentrisch angeordnet sein, so dass diese Körper durch Drehen um ihre Bohrung eine exzentrische Bewegung ausführen. Eine maximale Spreizwirkung wird im Fall der exzentrischen Verdrehung dann erreicht, wenn zwei benachbarte Körper um 180° gegeneinander verdreht sind.

Das Verschieben und/oder Verdrehen der Körper erfolgt entweder von Hand vor oder nach dem Aufsetzen der gerafften Schlauchhülle auf das Füllrohr oder durch ein oder mehrere Greifelemente, welche den jeweiligen Körper vor oder nach dem Aufbringen der gerafften Schlauchhülle an seinem Umfang erfassen und verdrehen und/oder verschieben. Dieses Greifelement ergreift den äusseren Umfang der Körper nur bereichsweise, wobei diese Umfangsbereiche des Körpers in direkten Kontakt mit der entrafften Schlauchhülle treten. Das Greifelement kann auch die zusätzliche Funktion einer Bremse übernehmen, welche die entraffte Schlauchhülle gegen den Aussenumfang des Körpers anpresst und dabei den Ablauf der Schlauchhülle beim Füllvorgang verzögert.

Das Verschieben und/oder Verdrehen der Körper erfolgt in einer anderen Ausführungsform mit einem kreiszylinderförmigen Rohr, welches sich auf dem Füllrohr befindet und es umgibt. Das eine, erste Ende des Rohres befindet sich am Füllrohrende, welches der Füllrohröffnung gegenüberliegt und an der Füllvorrichtung befestigt ist. Auf dem anderen, zweiten Ende des Rohres befindet sich ein Körper, während der nächste Körper in Richtung zur Füllrohröffnung versetzt direkt auf dem Aussenumfang des Füllrohrs befestigt ist. Bei dieser Ausführungsform lässt sich der auf dem Rohr angeordnete Körper in seiner Lage durch Drehen oder Verschieben des Rohres verändern, und zwar auch während des Füllvorganges. Hierbei wirkt die zum Drehen oder Verschieben erforderliche Kraft auf das erste Ende des Rohres ein, welches aus dem Raupenhohlraum hervorsteht. Das Rohr endet mit seinem zweiten Ende vor dem Körper, der direkt auf dem Füllrohr angebracht ist.

Alternativ zu dieser Ausführungsform endet das Rohr mit seinem zweiten Ende in der Nähe der Füllrohröffnung und ein Körper befindet sich auf dem Rohr. Das Rohr endet mit seinem ersten Ende vor einem weiteren Körper, welcher auf dem Füllrohr befestigt ist. In diesem Fall besteht keine Möglichkeit einer Lageveränderung der Körper während des Füllvorgangs.

In einer weiteren Ausführungsform befinden sich zwei Körper auf einem kreiszylinderförmigen Rohr, welches die Aussenfläche des Füllrohrs umgibt und vorzugsweise nur eine relativ kurze Länge im Vergleich zur Füllrohrlänge besitzt. Beide oder ein Körper sind drehbar auf dem Rohr angebracht. Vorzugsweise ist einer der Körper einstückig mit dem Rohr ausgebildet und der andere Körper auf dem Rohr drehbar angeordnet. Insbesondere ist der drehbare Körper dicht an dem benachbarten Körper angeordnet und wird in seiner Lage durch Halteelemente an der anliegenden Querschnittsfläche des benachbarten Körpers lösbar befestigt, z.B. mit einem Schnappverschluss, der in Vertiefungen oder Bohrungen in dieser Querschnittsfläche einrastet.

Das auf der Aussenseite des Füllrohrs angebrachte Rohr ist mit dem Füllrohr und die Körper sind mit dem Füllrohr oder dem Rohr oder miteinander lösbar befestigt, beispielsweise über ein Gewinde, einen Bajonettverschluss oder einen Schnappverschluss.

Eine besonders starke Spreizung wird erzielt, wenn zwei benachbarte gegeneinander verdrehte Körper in Richtung parallel zur Füllrohrlängsachse einander genähert werden. Je geringer der Abstand zwischen beiden Körpern wird, desto grösser ist die Spreizwirkung, so dass durch eine Steuerung des Abstandes, insbesondere während des Füllvorganges, eine Steuerung der Bremswirkung auf die vom Füllrohr ablaufende Schlauchhülle möglich ist und damit der Durchmesser der gefüllten Schlauchhülle beeinflusst werden kann.

Der Querschnitt der scheibenförmigen Körper, in Richtung der Füllrohrlängsachse gesehen, ist im wesentlichen kreisförmig oder oval, d.h. ellipsenförmig. Der Querschnitt umfasst auch Vielecke wie Dreiecke, Vierecke oder Sechsecke, deren Ecken abgerundet sind. Die Bohrung der Körper ist entweder dem Querschnitt des Füllrohrs angepasst oder hat die Form eines Langloches.

Der Aussenumfang der Körper ist geringer als der Innenumfang der entrafften Schlauchhülle, so dass die entraffte Hülle ohne grössere Reibungskräfte überwinden zu müssen über jeden Körper gezogen werden kann, sofern der Abstand zwischen zwei benachbarten Körpern ausreichend gross ist oder die beiden Körper, in Richtung der Füllrohrlängsachse gesehen, deckungsgleich angeordnet sind. Die Projektion der Körper in Richtung der Füllrohrlängsachse ergibt eine Gesamtfläche, die im kleinsten Fall gleich der Querschnittsfläche des grössten Körpers ist und somit kleiner ist als der Querschnitt der entrafften Schlauchhülle. Für den Füllprozess werden die Körper gegeneinander um das Füllrohr verdreht. Die Projektion der Körper in Richtung der Füllrohrlängsachse zeigt dann eine Gesamtfläche, die grösser ist als der Querschnitt der entrafften Schlauchhülle.

Die schlauchförmige Hülle besteht beispielsweise aus einem üblichen zur Herstellung von Würsten verwendeten Material, wie Cellulosehydrat, Kollagen oder Kunstdarm, z.B. aus Polyamid oder Polyester, und ist gegebenenfalls faserverstärkt, insbesondere mit einer Papiereinlage. Sie zeigt gegebenenfalls auf ihrer äusseren und/oder inneren Oberfläche eine übliche Beschichtung, z.B. aus einem wasserdampf- und sauerstoffundurchlässigen Material, welche beispielsweise mit einem üblichen die Haftung verbessernden Mittel auf der Schlauchoberfläche verankert wird. Bei Verwendung einer Hülle aus Cellulosehydrat kann diese einen üblichen Wassergehalt von z.B. 6 bis 15%, aber auch einen sehr hohen Wassergehalt besitzen, z.B. etwa 25% oder höher, so dass sie vor dem Befüllen nicht gewässert werden muss. Cellulosehydrathüllen werden gewöhnlich durch Koagulation von Viskose und Regenerierung der Cellulose hergestellt und enthalten Weichmacher wie Glycerin.

Wesentliche erfindungsgemässe Vorrichtungsteile sind die glättende Einrichtung, die in der Nähe der Füllrohröffnung direkt auf dem Füllrohr oder auf einem das Füllrohr umgebenden Rohr angeordnet ist, die gegebenenfalls vorhandenen auf die Aussenseite des entrafften Teils der Schlauchhülle einwirkenden und die glättende Einrichtung erfassenden Greifelemente, die gegen die glättende Einrichtung gepresst werden können, sowie ferner gegebenenfalls eine Bremse, welche die Schlauchhülle zwischen zwei benachbarten Körpern in Richtung zum Füllrohr, insbesondere senkrecht zur Füllrohrlängsachse, drückt oder einschnürt. Die Stopfvorrichtung dient zum Abfüllen z.B. von Wurstmasse in schlauchförmige Hüllen.

Die glättende Einrichtung ist vorzugsweise relativ starr und besteht gewöhnlich aus Metall oder Kunststoff. Sie wird während des Füllvorgangs örtlich fixiert und kann bei Bedarf während des Füllvorgangs verschoben oder verdreht werden. Sie besteht gewöhnlich aus zwei einzelnen Körpern. Die Form und die Anzahl der Körper kann beliebig gewählt werden. Ist die Vorrichtung mit Greifelementen ausgerüstet, so besteht ihre Oberfläche am Aussenumfang vorzugsweise aus elastischem Material, z.B. aus Gummi, und ist glatt, so dass die Schlauchhülle insbesondere beim Anpressen nicht beschädigt wird.

Nach dem Durchlaufen der glättenden Einrichtung wird die Schlauchhülle in bevorzugter Ausführungsform der Vorrichtung unmittelbar an der Füllrohröffnung durch einen Ring eingeschnürt, so dass das aus der Füllrohröffnung austretende Wurstbrät nicht in Richtung zur glättenden Einrichtung zurückfliessen kann. Anschliessend folgen an sich bekannte Einrichtungen zum Verschliessen bzw. Abbinden der Schlauchhülle, z.B. Clip-Vorrichtungen, und eine Schneidestation zum Abtrennen des gefüllten und verschlossenen Schlauchabschnitts.

Zu Beginn des Füllvorgangs wird zunächst der entraffte Raupenanfang der auf das Füllrohr aufgebrachten Raupe über die glättende Einrichtung gezogen und in der Clip-Vorrichtung verschlossen. Um das Aufbringen der Raupe auf das Füllrohr zu erleichtern, können modifizierte Körper verwendet werden, die aus einzelnen Segmenten bestehen, welche flach auf das Füllrohr geschwenkt oder geklappt werden können. Es ist auch möglich, die Körper nach Aufbringen der Raupe oder zusammen mit der Raupe als vorverpackte Körper auf das Füllrohr aufzubringen und die Körper nach Beendigung des Füllvorgangs nach ihrer Reinigung wiederzuverwenden. Die mit den Körpern vorverpackte Raupe wird beispielsweise analog US-A-4 007 761 hergestellt.

Durch den Druck, mit dem das pastöse Füllgut, z.B. Wurstmasse, durch das Füllrohr in den entrafften Teil der Schlauchhülle gepresst wird, wird die Schlauchhülle fortlaufend über die äussere Oberfläche der Körper gezogen, wobei sie gleichzeitig entrafft, geglättet und gespreizt wird. Sind die Reibungskräfte durch die gegenseitige Berührung der Innenseite der Schlauchhülle mit der äusseren Umfangsfläche der Körper ausreichend gross, so wird der Abzug der Schlauchhülle abgebremst. Die Bremswirkung kann nicht nur durch das Ausmass der Spreizung des Schlauchs reguliert werden, sondern auch durch die Anpresskraft zwischen Körpern und Greifelementen und/oder durch die Bremse, die auf die Schlauchhülle zwischen zwei benachbarten Körpern einwirkt. Gewöhnlich arbeitet man mit einer Abzugsgeschwindigkeit von 10 bis 20 m/min.

Nachdem der Schlauch vollständig gefüllt ist, werden die glättenden Elemente gegebenenfalls flach auf die äussere Oberfläche des Füllrohrs angelegt oder entfernt. Danach kann der nächste geraffte Schlauch auf das Füllrohr aufgebracht werden.

Die Erfindung wird anhand der Figuren näher erläutert.

Fig. 1a und 1b zeigt ellipsenförmige Körper in perspektivischer Ansicht,

Fig. 2a und 2b zeigt kreisförmige Körper mit Langloch in perspektivischer Ansicht,

Fig. 3a und 3b zeigt kreisförmige Körper mit exzentrischer Bohrung in perspektivischer Ansicht,

Fig. 4 zeigt eine Ausführungsform der Vorrichtung in Seitenansicht,

Fig. 5a zeigt eine weitere Ausführungsform der Vorrichtung in Seitenansicht,

Fig. 5b zeigt die Körper der Fig. 5a in Frontansicht in Richtung des Pfeils der Fig. 5a,

Fig. 6a und 6b zeigt eine weitere Ausführungsform der Körper in Seiten- bzw. Frontansicht.

Für gleiche Vorrichtungsteile werden gleiche Bezugsziffern verwendet.

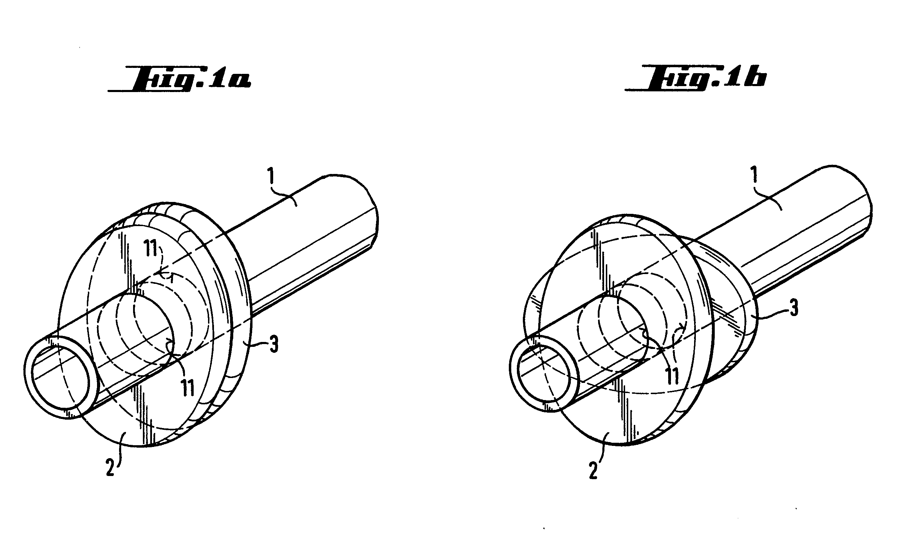

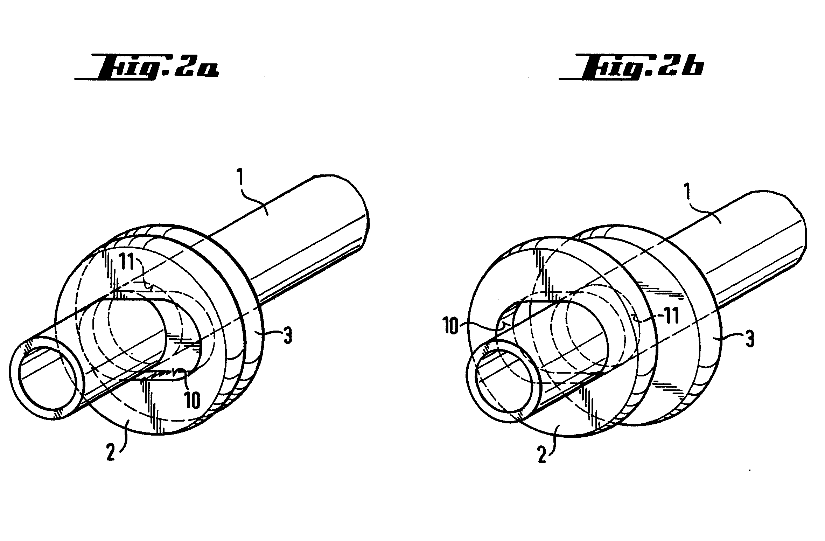

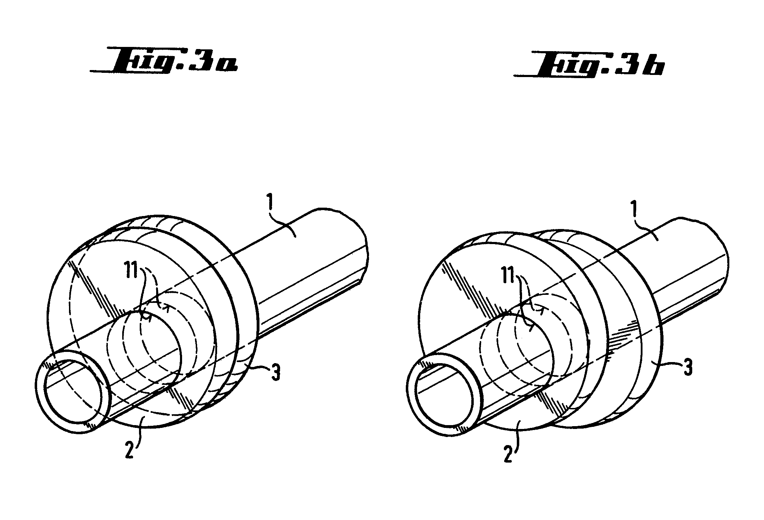

In der Fig. 1a sind die auf das Füllrohr 1 aufgebrachten elliptischen Körper 2 und 3 deckungsgleich und unmittelbar aneinander stossend angeordnet. In dieser Lage könnte der entraffte Teil der Schlauchhülle ohne Spreizwirkung über die Körper gleiten. In der Fig. 1b sind beide Körper 2 und 3 um 90° gegeneinander verdreht. In diesem Fall wird die maximale Spreizwirkung erreicht. In der Fig. 2a zeigt der Körper 2 ein Langloch 10, während der Körper 3 eine kreisförmige Bohrung 11 aufweist, mit der er am Füllrohr 1 befestigt ist. Durch Verschieben des Körpers 2 in einer Ebene senkrecht zur Füllrohrlängsachse werden die in der deckungsgleichen Lage angeordneten Körper 2, 3 gegeneinander verschoben (Fig. 2b). Das gleiche Prinzip wird in der Fig. 3a und 3b gezeigt, wo der exzentrisch gelagerte kreisförmige Körper 2 gegen den zweiten Körper 3 verdreht wird. In den Fig. 1a bis 3b sind aus Gründen der besseren Klarheit keine Elemente zum Fixieren der Körper 2, 3 auf dem Füllrohr 1 dargestellt.

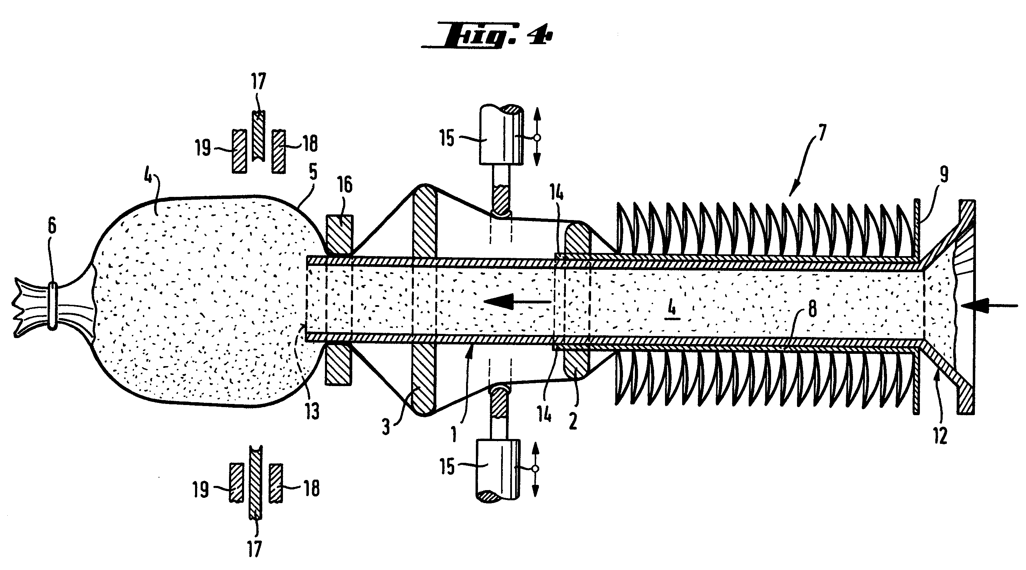

In Fig. 4 tritt die Wurstmasse 4 durch das Füllrohr 1 in die entraffte Schlauchhülle 5 ein, die mit einem Clip 6 verschlossen ist. Der geraffte Schlauchteil 7 befindet sich auf einem Rohr 8, welches auf der Aussenfläche des Füllrohrs 1 drehbar und verschiebbar angeordnet ist. Das erste Rohrende 9 befindet sich am Füllrohrende 12 und gegenüber der Füllrohröffnung 13. Auf dem zweiten Ende 14 des Rohrs 8 ist ein Körper 2 befestigt. Die Schlauchhülle gleitet beim Füllvorgang über die Körper 2 und 3 und wird durch die Bremse 15 in Richtung zur Füllrohroberfläche eingedrückt. Das Ringelement 16 verhindert das Zurückfliessen der Wurstmasse 4 auf die äussere Oberfläche des Füllrohrs 1. Mit 17 ist eine Schneidestation und mit 18 und 19 Clipstationen bezeichnet.

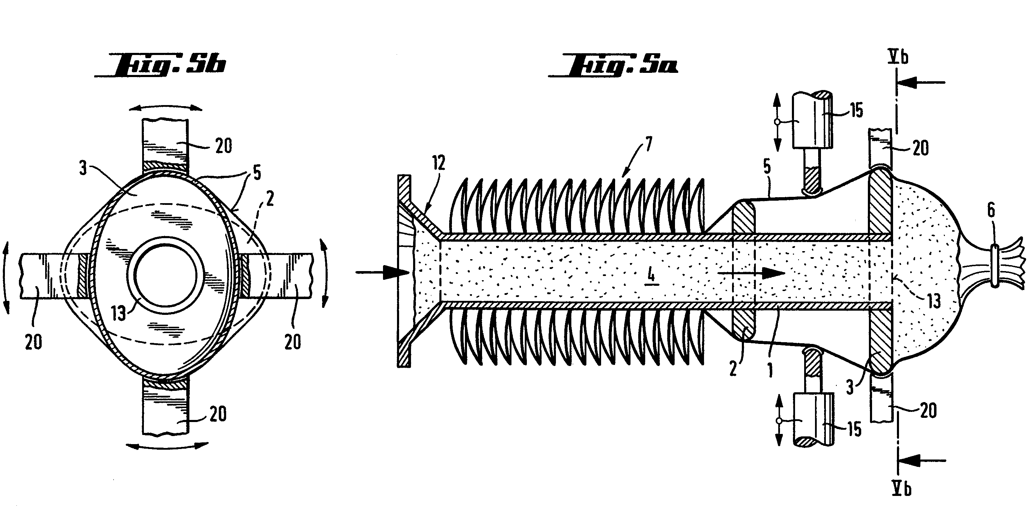

Die in Fig. 5a und 5b gezeigte Ausführungsform der Vorrichtung zeigt eine Greifeinrichtung 20 zum Verdrehen oder Verschieben des Körpers 3.

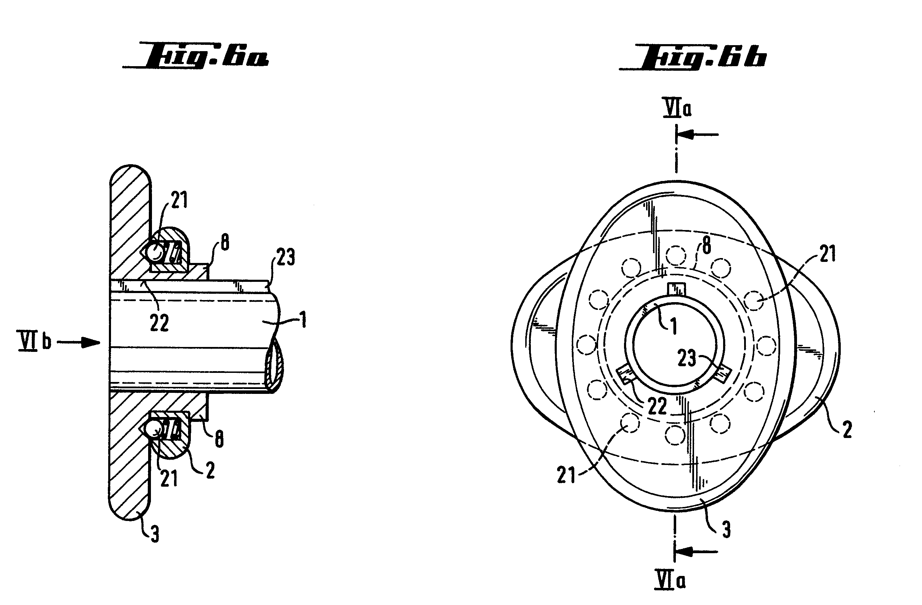

Eine weitere Ausführungsform der Körper ist in Fig. 6a und 6b dargestellt. Beide Körper 2 und 3 befinden sich auf dem Rohr 8, welches auf dem Füllrohr 1 befestigt ist. Das Rohr 8 und der Körper 3 sind einstückig ausgebildet, der Körper 2 ist auf dem Rohr 8 drehbar angeordnet und rastet mit Schnappelementen 21 in die Querschnittsfläche des benachbarten Körpers 3 ein. Die Ausnehmungen 22 im Rohr 8 dienen zum Aufschieben auf das Füllrohr 1, welches entsprechende Erhebungen 23 aufweist.

**Patentansprüche**

1. Vorrichtung mit einer Einrichtung zum Entraffen, Glätten und Spreizen sowie gegebenenfalls Bremsen einer gerafften Schlauchhülle während des Füllens der entrafften Schlauchhülle mit fliessfähiger Masse wie Wurstmasse oder Schinkenstücke, umfassend ein Füllrohr (1) einer Fülleinrichtung, aus dessen Öffnung (13) die fliessfähige Masse (4) unter Druck austritt, eine geraffte Schlauchhülle (7), die auf der äusseren Oberfläche des Füllrohrs (1) angeordnet ist und die einen entrafften Teil (5) mit einem vorgegebenen Innenumfang aufweist, in welchen die fliessfähige Masse (4) eingepresst wird, wobei die Schlauchhülle fortlaufend entrafft wird und vom Füllrohr (1) abläuft, und eine auf der äusseren Oberfläche des Füllrohrs (1) in der Nähe der Füllrohröffnung (13) angeordnete eine Bohrung aufweisende Einrichtung (2, 3) zum Glätten und Spreizen der Schlauchhülle, die sich im Innern der Schlauchhülle (5) befindet und die mit ihrer Bohrung (10, 11) auf dem Füllrohr (1) aufgeschoben und daran befestigt ist, dadurch gekennzeichnet, dass die Einrichtung zum Entraffen, Glätten und Spreizen sowie gegebenenfalls Bremsen der Schlauchhülle aus zwei oder mehreren, auf dem Füllrohr (1) angeordneten scheibenförmigen Körpern (2, 3) mit quer zur Längsachse des Füllrohrs sich erstreckenden Grundflächen besteht, wobei wenigstens einer der Körper in seiner Lage am Füllrohr (1) lösbar fixiert ist und in einer Ebene senkrecht und/oder parallel zur Füllrohrlängsachse verdrehbar und/oder verschiebbar ist, der Aussenumfang jedes Körpers (2, 3) kleiner ist als der Innenumfang der entrafften Schlauchhülle (5) und die durch Verdrehen und/oder Verschieben der Körper (2, 3) gegeneinander einstellbare Projektion der Querschnittsflächen der Körper (2, 3) in Richtung der Füllrohrlängsachse eine Gesamtfläche zeigt, deren Umfang grösser ist als der Innenumfang der Schlauchhülle (5) im entrafften Zustand.

2. Vorrichtung nach Anspruch 1, dadurch gekennzeichnet, dass zumindest einer der Körper (2, 3) ovalen oder kreisförmigen Querschnitt zeigt oder die Form eines Vielecks mit abgerundeten Ecken aufweist.

3. Vorrichtung nach Anspruch 1 oder 2, dadurch gekennzeichnet, dass zumindest einer der Körper (2, 3) exzentrisch um die Füllrohrlängsachse drehbar ist, wobei seine Bohrung (10, 11) exzentrisch angeordnet ist.

4. Vorrichtung nach einem der Ansprüche 1 bis 3, dadurch gekennzeichnet, dass sie ein oder mehrere Greifelemente (20) umfasst, welches jeweils einen Körper (2, 3) an seinem Aussenumfang erfasst und verdreht und/oder verschiebt und gegebenenfalls die Schlauchhülle beim Füllvorgang abbremst.

5. Vorrichtung nach einem der Ansprüche 1 bis 4, dadurch gekennzeichnet, dass sie ein kreiszylinderförmiges Rohr (8) umfasst, welches sich auf dem Füllrohr (1) befindet, das Füllrohr (1) umgibt und auf dem Füllrohr (1) verdrehbar und/oder verschiebbar angebracht ist, wobei ein Körper (2) auf diesem Rohr (8) befestigt ist und mit dem Rohr (8) verdreht und/oder verschoben wird.

6. Vorrichtung nach Anspruch 5, dadurch gekennzeichnet, dass sich das erste Ende (9) des Rohrs (8) am Füllrohrende (12) befindet, welches der Füllrohröffnung (13) gegenüberliegt und an der Füllvorrichtung befestigt ist, und das zweite Ende (14) des Rohrs (8) vor einem Körper (3) endet, welcher direkt auf dem Füllrohr (1) angeordnet ist.

7. Vorrichtung nach Anspruch 5, dadurch gekennzeichnet, dass sich das zweite Ende (14) des Rohres (8) in der Nähe der Füllrohröffnung (13) befindet und das erste Ende (9) des Rohres (8) vor einem Körper (2) endet, welcher direkt auf dem Füllrohr (1) angeordnet ist.

8. Vorrichtung nach Anspruch 5, dadurch gekennzeichnet, dass auf dem Rohr (8) zwei Körper (2, 3) angeordnet sind, wobei der eine Körper (3) mit dem Rohr (8) fest verbunden ist, insbesondere mit dem Rohr (8) einstückig ausgebildet ist, und der andere Körper (2) drehbar auf dem Rohr angeordnet und gegebenenfalls mit dem anderen Körper (3) lösbar fixiert ist.

9. Vorrichtung nach einem der Ansprüche 1 bis 8, dadurch gekennzeichnet, dass sie eine oder mehrere auf die Aussenseite der entrafften Schlauchhülle einwirkende Bremse(n) (15) zum Eindrücken der entrafften Schlauchhülle (5) im Bereich zwischen zwei Körpern (2, 3) in Richtung zur Füllrohrlängsachse aufweist.

10. Vorrichtung nach einem der Ansprüche 1 bis 9, dadurch gekennzeichnet, dass der Aussenumfang jedes Körpers (2, 3) bis zu 20% kleiner ist als der Innenumfang der entrafften Schlauchhülle (5).

11. Vorrichtung nach einem der Ansprüche 1 bis 10, dadurch gekennzeichnet, dass die maximale Gesamtfläche der Projektion der Körper (2, 3) einen Umfang aufweist, der bis zu 20% grösser ist als der Innenumfang der entrafften Schlauchhülle (5).

12. Vorrichtung nach einem der Ansprüche 1 bis 11, dadurch gekennzeichnet, dass sie ein an sich bekanntes unmittelbar an der Füllrohröffnung angebrachtes Ringelement (16) umfasst, durch das ein entraffter Teil (5) der Schlauchhülle eingeschnürt wird zur Verhinderung des Zurückfliessens der aus der Füllrohröffnung (13) austretenden Masse (4) in Gegenrichtung zur Schlauchfortbewegung.

13. Vorrichtung nach einem der Ansprüche 1 bis 12, dadurch gekennzeichnet, dass sie an sich bekannte Abbinde- und/oder Clipeinrichtungen (18, 19) zum Verschliessen von Schlauchhüllenabschnitten sowie gegebenenfalls eine Schneidestation (17) zum Abtrennen gefüllter Schlauchhüllenabschnitte umfasst, welche in Richtung der Schlauchfortbewegung nach dem Füllrohr (1) angeordnet sind.

## Claims

1. Device including a device for unshirring, smoothing, expanding and, if appropriate, braking a shirred tubular casing during the stuffing of the unshirred casing with a fluid material, such as a sausage composition or pieces of ham, said device comprising a stuffing horn (1) of a stuffing equipment, through the aperture (13) of which the fluid material (4) is forced under pressure; a shirred tubular casing (7) disposed on the outer circumferential surface of the stuffing horn (1) and possessing an unshirred portion (5) of a predetermined inner circumference, into which the fluid material (4) is pressed, whereby the tubular casing is continuously unshirred and removed from the stuffing horn (1); and a device (2, 3) with a bore, for smoothing and expanding the tubular casing, which devise is located on the outer circumferential surface of the stuffing horn (1) near the stuffing horn aperture (13), in the interior of the tubular casing (5), and by means of its bore (10, 11) is pushed onto and fastened to, the stuffing horn (1), characterized in that said device for unshirring, smoothing, expanding and, if appropriate, braking the tubular casing comprises two or more disk-shaped bodies (2, 3) which are arranged on the stuffing horn (1) and have base surfaces extending perpendicularly relative to the longitudinal axis of the stuffing horn, whereby at least one of said bodies (2, 3) is detachably fixed to the stuffing horn (1) and can be rotated and/or shifted, in a plane parallel and/or perpendicular to the longitudinal axis of the stuffing horn, that the outer circumference of each body (2, 3) is smaller than the inner circumference of the unshirred tubular casing (5), and that the projection of the cross-sectional surfaces of the bodies (2, 3) in the direction of the longitudinal axis of the stuffing horn, which can be achieved by rotating and/or shifting the bodies (2, 3) relative to one another, results in a total surface area which has a greater circumference than the inner circumference of the tubular casing (5) in the unshirred state.

2. Device as claimed in claim 1, wherein at least one of the bodies (2, 3) has an oval or circular cross-section or has the shape of a polygon possessing rounded corners.

3. Device as claimed in claim 1 or 2, wherein at least one of the bodies (2, 3) can be eccentrically rotated about the longitudinal axis of the stuffing horn, said planar body being provided with an eccentrical bore (10, 11).

4. Device as claimed in any of claims 1 to 3, which comprises one or several gripping elements (20), by each of which the outer circumference of one body (2, 3) is seized and rotated and/or shifted, and by which the movement of the tubular casing during stuffing is slowed down, if appropriate.

5. Device as claimed in any of claims 1 to 4, which comprises a cylindrical tube (8), which is located on the stuffing horn (1), surrounds the stuffing horn (1) and is fastened to the stuffing horn (1), in a way such that it can be rotated about and/or shifted along the stuffing horn (1), one body (2) being firmly fastened to said tube (8) and being rotated and/or shifted together with said tube (8).

6. Device as claimed in claim 5, wherein the first end (9) of the tube (8) is located at that the end (12) of the stuffing horn (1) which lies opposite the stuffing horn aperture (13) and is fastened to the stuffing unit, and the second end (14) of the tube (8) ends before reaching a body (3) located directly on the stuffing horn (1).

7. Device as claimed in claim 5, wherein the second end (14) of the tube (8) is near the stuffing tube aperture (13) and the first end (9) of the tube (8) ends before reaching a body (2) which is located directly on the stuffing horn (1).

8. Device as claimed in claim 5, wherein two bodies (2, 3) are located on the tube (8), whereby one of these bodies (3) is firmly connected with the tube (8), and in particular forms one single piece together with the tube (8), whereas the other body (2) is rotatably mounted on the tube (8) and optionally is detachably fixed to the first body (3).

9. Device as claimed in any of claims 1 to 8, which comprises one or several brake(s) (15), which act(s) on the outer circumferential surface of the unshirred tubular casing, so that the unshirred tubular casing (5) is constricted between two bodies (2, 3), in the direction of the longitudinal axis of the stuffing horn (1).

10. Device as claimed in any of claims 1 to 9, wherein the outer circumference of each body (2, 3) is up to 20% smaller than the inner circumference of the unshirred tubular casing (5).

11. Device as claimed in any of claims 1 to 10, wherein the maximum total surface which can be obtained by a projection of the bodies (2, 3) has a circumference which is up to 20% longer than the inner circumference of the unshirred tubular casing (5).

12. Device as claimed in any of claims 1 to 11, which comprises a ring element (16) which is known per se and is disposed directly at the stuffing horn aperture (13), and by which an unshirred portion (5) of the tubular casing is constricted, in order to prevent the material (4) forced through the stuffing horn aperture (13), from flowing back in a direction opposite to the direction, in which the tubular casing is moved.

13. Device as claimed in any of claims 1 to 12, which comprises tying-off or clipping devices (18, 19), which per se are known, for closing portions of the tubular casing, and, if appropriate, a cutting device (17) for cutting off stuffed portions of the tubular casing, these devices being arranged after the stuffing horn (1), seen in the direction, in which the tubular casing is moved.

**Revendications**

1. Appareil équipé d'un dispositif pour déplisser, lisser et dilater ainsi que freiner éventuellement une enveloppe tubulaire plissée pendant qu'on remplit l'enveloppe tubulaire déplissé d'une masse fluide ou semi-fluide telle que la chair à saucisse ou des morceaux de jambon, comprenant un tube de remplissage (1), appartenant à une machine de remplissage, par l'ouverture (13) duquel la masse semi-fluide (4) sort sous pression, une enveloppe tubulaire plissée (7) qui est disposée sur la surface extérieure du tube de remplissage (1) et présente une partie déplissée (5) qui possède un périmètre intérieur prédéterminé et dans laquelle la masse semi-fluide (4) est bourrée, l'enveloppe tubulaire se déplissant progressivement et quittant le tube de remplissage (1), et un dispositif (2, 3) ayant un perçage et destiné à lisser et à dilater l'enveloppe tubulaire, dispositif qui est placé sur la surface externe du tube de remplissage (1), à proximité de l'orifice (13) du tube de remplissage, et qui se trouve à l'intérieur de l'enveloppe tubulaire (5) et est emmanché par son perçage (10, 11) sur le tube de remplissage (1) et fixé à celui-ci, caractérisé en ce que le dispositif destiné à déplisser, lisser et dilater, ainsi qu'éventuellement à freiner l'enveloppe tubulaire, est composé de deux corps ou plus en forme de disque (2, 3) disposés sur le tube de remplissage (1), dont les surfaces de base s'étendent transversalement à l'axe longitudinal du tube de remplissage, au moins un des corps étant fixé en position de façon amovible sur le tube de remplissage (1) et pouvant être décalé angulairement et/ou déplacé en translation dans un plan perpendiculaire à l'axe longitudinal du tube de remplissage et/ou parallèlement à cet axe longitudinal, en ce que le périmètre extérieur de chaque corps (2, 3) est plus petit que le périmètre intérieur de l'enveloppe tubulaire déplissée (5) et que les projections des surfaces de la section des corps (2, 3) selon l'axe longitudinal du tube de remplissage, que l'on peut régler l'une par rapport à l'autre par décalage angulaire et/ou translation des corps (2, 3), présentent une surface totale dont le périmètre est supérieur au périmètre intérieur de l'enveloppe tubulaire (5) à l'état déplissé.

2. Appareil selon la revendication 1, caractérisé en ce qu'au moins l'un des corps (2, 3) présente une section ovale ou circulaire, ou encore la forme d'un polygone à angles arrondis.

3. Appareil selon la revendication 1 ou 2, caractérisé en ce qu'au moins un des corps (2, 3) peut tourner de façon excentrée autour de l'axe longitudinal du tube de remplissage, son perçage (10, 11) étant disposé dans une position excentrée.

4. Appareil selon l'une des revendications 1 à 3, caractérisé en ce qu'il comprend un ou plusieurs éléments de préhension (20) dont chacun saisit un corps (2, 3) au niveau de son périmètre extérieur et le décale angulairement et/ou le déplace en translation, et freine éventuellement l'enveloppe tubulaire pendant l'opération de remplissage.

5. Appareil selon l'une des revendications 1 à 4, caractérisé en ce qu'il comprend un tube cylindrique à base circulaire (8) qui se trouve sur le tube de remplissage (1), qui entoure le tube de remplissage (1) et qui est monté mobile en rotation et/ou en translation sur le tube de remplissage (1), un corps (2) étant fixé sur ce tube (8) et pouvant être décalé angulairement et/ou déplacé en translation avec le tube (8).

6. Appareil selon la revendication 5, caractérisé en ce que la première extrémité (9) du tube (8) se trouve à l'extrémité (12) du tube de remplissage qui est à l'opposé de l'orifice (13) du tube de remplissage, et est fixée à la machine de remplissage, et la deuxième extrémité (14) du tube (8) se termine avant un corps (3) qui est agencé directement sur le tube de remplissage (1).

7. Appareil selon la revendication 5, caractérisé en ce que la deuxième extrémité (14) du tube (8) se trouve à proximité de l'orifice (13) du tube de remplissage et la première extrémité (9) du tube (8) se termine devant un corps (2) qui est monté directement sur le tube de remplissage.

8. Appareil selon la revendication 5, caractérisé en ce que deux corps (2, 3) sont montés sur le tube (8), un corps (3) étant fixé rigidement au tube (8) et étant en particulier formé d'une seule pièce avec le tube (8) et l'autre corps (2) étant monté rotatif sur le tube et éventuellement fixé à l'autre corps (3) de façon amovible.

9. Appareil selon l'une des revendications 1 à 8, caractérisé en ce qu'il comprend un ou plusieurs frein(s) (15) agissant sur la face externe de l'enveloppe tubulaire déplissée pour presser l'enveloppe tubulaire déplissée (5) vers l'intérieur dans la région entre les deux corps (2, 3), pour la rapprocher de l'axe longitudinal du tube de remplissage.

10. Appareil selon l'une des revendications 1 à 9, caractérisé en ce que le périmètre extérieur de chaque corps (2, 3) est plus petit, dans une proportion pouvant atteindre 20%, que le périmètre intérieur de l'enveloppe tubulaire déplissée (5).

11. Appareil selon l'une des revendications 1 à 10, caractérisé en ce que la surface totale maximum de la projection des corps (2, 3) présente un périmètre qui est supérieur, dans une proportion pouvant atteindre jusqu'à 20%, au périmètre intérieur de l'enveloppe tubulaire déplissée (5).

12. Appareil selon l'une des revendications 1 à 11, caractérisé en ce qu'il comprend un élément annulaire (16), connu en soi, monté directement sur l'orifice du tube de remplissage, par l'intermédiaire duquel une partie déplissée (5) de l'enveloppe tubulaire est resserrée pour empêcher la chair (4) qui sort de l'orifice (13) du tube de remplissage, de refluer en sens inverse du mouvement d'avance de l'enveloppe.

13. Appareil selon l'une des revendications 1 à 12, caractérisé en ce qu'il comprend des dispositifs de ligature et/ou d'agrafage connus en soi (18, 19) pour fermer les tronçons d'enveloppe tubulaire et éventuellement un poste de coupe (17) destiné à séparer les tronçons de l'enveloppe tubulaire remplie, ces dispositifs et ce poste de coupe se trouvant en aval de tube de remplissage (1) dans le sens de l'avance de l'enveloppe tubulaire.

Fig.1a

Fig.1b

0 092 131

Fig. 2a

Fig. 2b

**Fig. 3a**

**Fig. 3b**

0 092 131

Fig. 4

0 092 131

Fig. 5a

Fig. 5b

# Fig. 6a

# Fig. 6b

0 092 131